# EUROPEAN PATENT SPECIFICATION

(11) **EP 0 542 731 B1**
(45) Date of publication and mention of the grant of the patent: **14.02.1996**
(21) Application number: 93300849.2
(22) Date of filing: 08.05.1989
(51) Int. Cl.: F16L 55/165

(54) **Method of lining a pipe**
Verfahren zum Beschichten eines Rohres
Méthode de garnissage d'un tuyau

(30) Priority: 09.05.1988 GB 8810894
(43) Date of publication of application: 19.05.1993
(62) Divisional of application: 89304598.9
(73) Proprietor: British Gas plc, London SW1V 3JL (GB)
(72) Inventor: McGuire, Brian Edward, Shaw, Oldham OL2 7RW (GB)
(74) Representative: Morgan, David James

(56) References cited:
- GB-A- 2 186 340
- US-A- 3 462 825

## Description

This invention relates to a method for the lining of existing pipes. The invention will be described in relation to gas, oil and water supply pipes, but it will be appreciated that the invention is applicable to pipes of all kinds.

When lining pipes (which pipes when ground embedded are prone to crack due to ground movement) it is known to draw a heated liner of plastic tube through a die to reduce the diameter and then into a length of the existing pipe.

The present invention relates to an improved method of lining installed pipework when using a swaging ie to reduce the diameter of the liner pipe prior to its being drawn into the existing pipework. By "installed" pipework is meant pipework that has already been installed in position to carry out its intended purpose, i.e. ground embedded pipework for gas, oil water or sewage.

In the case of ground embedded pipework it will be appreciated that the normal arrangement when such a process is being carried out will involve a winch adjacent to an excavation at one end of a length of pipe to be lined, whence a cable or similar flexible ligament passes through the length of pipe to a second excavation beyond which it is attached to the front end of a liner pipe of plastics material. Adjacent to the second excavation is a tube heating and compressing apparatus which has a heater and a size reduction die. At a downstream end of this apparatus there may be a reciprocatable "pusher" which can grip the pipe and draw it from the apparatus and urge it towards the pipe to be lined.

In the article "Plastic Liner Takes to Water", New Civil Engineer, 22 October 1987, pages 55 and 56, a preformed polyethylene liner pipe is drawn at ambient temperature through a die and into a ground embedded pipe to be lined to form a tight integral lining. The liner pipe has an initial external diameter greater than the internal diameter of the pipe to be lined and the external diameter of the liner pipe is reduced by the die to below the internal diameter of the pipe to be lined. The liner pipe then expands in situ into engagement with the internal wall of the pipe to be lined. The die is mounted in a swaging rig which is secured at ground level above an excavation pit which allows access to be gained to the ground embedded pipe.

US Patent No. 3462825 relates to a lined tube, particularly a lined flexible tube, wherein the liner is a fluorocarbon pipe with an initial outside diameter 10 to 15% greater than the inside diameter of the tube. The liner is located within the tube by gripping one end of the liner and pulling it without application of heat through a reduction die and into the tube, releasing the grip on the liner and then allowing the liner to expand into tight engagement with the inner wall of the tube.

UK Published Patent Application No. 2186340A relates to a method for lining a pipe or main comprising heating a length of synthetic resin liner pipe of external diameter substantially equal to or greater than the internal diameter of the pipe or main to be lined, drawing the heated liner pipe through a die to reduce its external diameter to less than the internal diameter of the pipe or main to be lined, causing the liner pipe to enter the pipe or main to be lined and pressurising the internal wall of the liner pipe to cause it to expand into engagement with the internal wall of the pipe or main to be lined.

According to the present invention, there is provided a method of lining a pipe which includes the steps of taking a length of liner pipe of external diameter greater than the internal diameter of the pipework to be lined, drawing the liner pipe at ambient temperature through a swaging die using pulling means under tension attached to the leading end of the liner pipe and threaded through the pipework to reduce the external diameter of the liner pipe by up to 15%, drawing the liner pipe through the pipe to be lined with its outer diameter reduced to and/or maintained at a dimension less than that of the inner diameter of the pipe to be lined, the tension applied by the pulling means being such as partially to restrain the radial expansion of the outer surface of the liner pipe after its emergence from the die, and thereafter allowing the liner pipe to expand within the pipe to be lined by relaxation of the said tension followed by memory induced expansion at ordinary atmospheric pressure and at the ambient temperature of the pipe to be lined, the pipe to be lined being installed ground embedded pipework, the pipe to be lined and the liner pipe being at least 10 metres in length, the liner pipe being made from polyethylene or a copolymer of ethylene and at least one alphaolefin of up to ten carbon atoms and the swaging die being attached indirectly to the pipe to be lined by die support means itself attached directly to the pipe to be lined or the die is itself attached directly to the pipe to be lined.

In one aspect of the present invention, the liner pipe may be heated by methods known per se prior to the swaging operation.

Alternatively, or in addition, the liner pipe may also be heated during its passage through the swaging die. In such a case, means are provided for heating the internal surface of the swaging die simultaneously with the passage of the liner pipe through it. In either or all cases the liner pipe may be preheated to a temperature of from 45°C. to 55°C.

The choice of liner pipes suitable for swaging at ambient temperatures will depend upon, inter alia, the dimensions of the liner pipe, its SDR ratio and the particular characteristics of material from which the liner pipe is made. Whether in any particular circumstances a liner pipe may be successfully swaged at ambient temperatures is a matter which may easily be ascertained by the operator by way of trial and error.

The present invention envisages in a preferred aspect of its operation the employment of a swaging die that is provided with a surface which, or part of which, is inclined at an angle between 6 degrees and 32 degrees there being no part at an angle of more than 32 degrees to the die axis and which extends over an axial length that is a least 70% of the axial distance between the part where the liner pipe engages with such surface and the part where the liner pipe disengages from the die.

Dies used according to the prior art methods of pipe swaging as employed in practice have comprised two portions, the first being the inclined swaging surface reducing in diameter to a minimum value and the second being an axial continuation of the die interior having its walls parallel to the die axis and an internal diameter equal to such minimum value. We have found that in the carrying out of the present invention, it is advantageous to reduce the axial length of the said second portion relative to the axial length of the first portion, or else to dispense with the second portion altogether. In particular, by so designing the die that the first part extends over an axial distance that is at least 70%, and preferably over 80%, and advantageously over 85% of the axial distance between the part where the liner pipe engages with the inclined surface and the outlet orifice where the pipe emerges from the die, the pulling tension required to swage the liner pipe is substantially decreased. Another consequence of the use of such a die in the carrying out of the present invention is that, when using a liner pipe of synthetic hydrocarbon resins such as polyethylene or modified polyethylene as conventionally used in practice, the liner pipe on emerging from such outlet orifice manifests a greater tendency towards radial expansion relative to the degree of swaging exerted by the die than in the case where, as in the prior art, the swaging die was provided with a second portion as mentioned above of substantial length, typically in the order of 50% of the overall die length. On release of pulling tension such tendency will result in a greater proportional radial expansion in relation to the pulling tension employed than would have occurred using the prior art dies.

The process of the present invention relies both upon the expansion of the liner pipe within the pipework as a result of relaxation of the pulling tension and also as a result of the memory induced expansion of the swaged liner pipe. By the use of a die having a reduced axial length of its second portion relative to the axial length of its first portion as mentioned above the proportionate expansion resulting from the relaxation of the pulling tension may be significantly increased thus resulting in improved control over the pipe lining operation.

The arrangements described above furthermore provide a significant advantage in relation to the case where a "pusher" device as e.g. of the kind described in GB-A-2 215 804 (published 27/09/89) is used. It is inherent in the operation of such a pusher that, when it grips the liner pipe and urges it towards the pipework to be lined, there is experienced a temporary reduction in the pulling tension exerted by the pulling device (such as a winch) at the far end of the pipework. Upon the pusher releasing its grip, the tension resorts back to its original value. In practice, this results in a continuous fluctuation in the tension. It is desirable that the changeover between maximum and minimum tensions in the course of the fluctuations be affected as smoothly as possible and with the minimum amount of sharp transitions or jerks.

We have found that as a result of the preferred use of the dies of the present invention which require substantially lower pulling tensions to effect a comparable degree of swaging as compared with prior art dies and which furthermore bring about a greater "springback" tendency on the part of the pipe emerging from the die orifice, the amplitudes of the fluctuations are reduced and the fluctuations themselves become smoother. Having regard to the very high forces involved in exerting the pulling tension, this again constitutes a significant improvement in both the safety and the efficiency of the operations.

The length of the pipework which may be lined in a single operation by the method of this invention is from 10 metres upwards. The limiting length of pipework which may be lined in any particular case will depend upon a combination of factors including the friction resistance to the movement of the liner within the pipework, the extent to which the liner pipe with reduced diameter after insertion into the pipework becomes subject to deformation (a problem encountered with larger diameter liner pipes of relatively large SDR ratio), the limiting tension on the leading end of the liner pipe beyond which it may suffer permanent damage or elongation, the capacity of the mechanism (such as a winch) operating the pulling means and the uniformity of diameter and/or direction or otherwise of the pipework interior. The most suitable practicable length to be lined in any particular case can readily be ascertained by trial and error. By the method of the present invention, it becomes possible to line lengths of pipework up to 450 metres or more. The surface finish of the die may be provided by means known in the art. It is preferred that such surface finish should be at least down to N7 typically down to N6 preferably down to N5 and ideally in the order of N4 or lower.

It has been found advantageous to employ a die having a relatively shallow angle of inclination of the inclined surface of the die to the die axis and within the range of 12 degrees to 29 degrees and preferably from 20 degrees to 25 degrees. Reduction of the angle assists in reducing the pulling load required to effect compression of the liner pipe but at the same time increases the area of the swaging surface for any given degree of compression. The optimum angle will be that which, in any particular case, minimises the overall disadvantages of a highload to bring about compression on the one hand and a large friction inducing die surface area on the other hand. The die surface may be frusto conical in shape. Alternatively, it may have a variable angle of inclination to the die axis within the above stated limits. It is a significant and advantageous feature of the present invention that when using a liner pipe made of a deformable memory retaining material in accordance with the method of the invention, the liner pipe may be left to expand radially within the lined pipework and under the influence of the memory of the material constituting it. By suitable choice of initial diameter of the liner pipe, degree of compression during the swaging operation and die orifice diameter in relation to the internal diameter of the pipework to be lined, the present invention can bring about the provision of a close fitting lining to the pipework resulting, (following relaxation of tension), from the memory induced expansion of the pipelining at the ambient temperatures and pressure within the pipework. It is unnecessary to have recourse to the means provided by the prior art for expanding the pipe lining within the pipework such as the application of internal super atmospheric pressure or the application of heat to the pipelining from within or the initial application of very high stretching forces to the pipelining to bring about an initial reduction in its diameter prior to insertion into the pipework. The precise operating conditions employed in order to carry out the method of the present invention will depend upon the several factors referred to above in any particular case and will vary according to the pipework internal diameter and the purpose for which it is put to use (for example whether for water or gas), the material of the pipelining and the SDR of the pipelining. (By SDR is meant the ratio of the diameter of the pipelining before swaging to its wall thickness).

The liner pipe is made of polyethylene or a co-polymer of ethylene and at least one alphaolefin of up to ten carbon atoms. The reduction in diameter of the liner pipe during passage through the swaging die may be up to 15%, but reductions in the range 5.0% to 9.8% are preferred. The reduction should be such as to allow drawing of the liner pipe through the existing pipe. This somewhat simple requirement is complicated by the fact that existing pipes are often not accurately sized internally, that the internal diameter may vary along the length of the pipe, and that the rate of recovery of the liner pipe may vary with ambient conditions and with the material from which the pipe is made. The wall thickness of the liner pipe should be as thin as possible consistent with the use to which the pipe is to be put and the requirement to provide adequate internal sealing of the existing pipe. A ratio of wall thickness to diameter of the liner pipe in the range 10 to 46 is preferred.

The maximum tension chosen for pulling the liner pipe through the existing pipe should advantageously be in the range 45% to 55% of the yield strength of the liner pipe in question, and in particular about 50%. The ratio of the throat diameter of the die to the diameter of the existing pipe should advantageously be in the range 1.05:1 to 1.15:1. A reciprocatable pusher may be employed to augment the tension exerted by the said pulling means to draw the liner pipe through the swaging die.

In order that the invention may be more clearly understood one embodiment of the invention will now be described by way of example, with reference to the accompanying drawings, in which: -
Figure 1 is a side elevational view in section of one form of apparatus according to the invention, and
Figure 2 is a side elevational view in section of a modification of the apparatus shown in Figure 1.

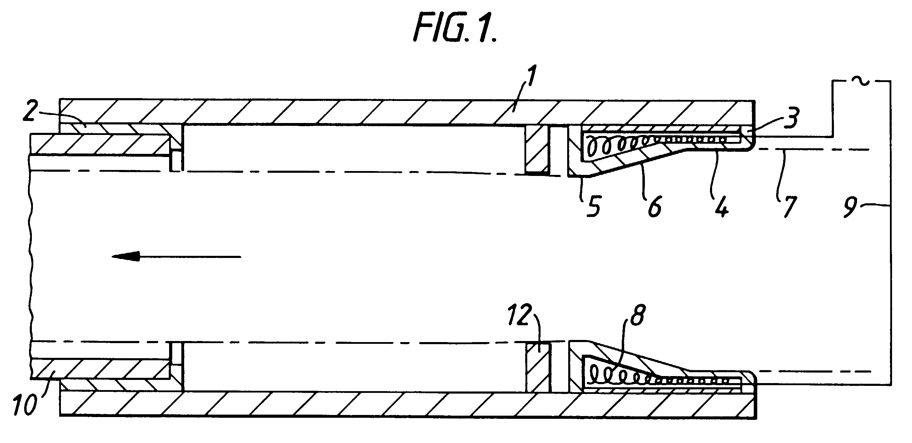

Referring to Figure 1, the apparatus comprises a supporting structure 1 which incorporates a pipe clamp 2 at one end and a swaging die 3 at the other. The swaging die 3 is generally cylindrical and comprises a section of larger diameter 4 joined to a section of smaller diameter 5 by a conical section 6. The swaging die has a polished swaging surface which is inclined at an angle of between 6 degrees and 32 degrees to the axis of the die advantageously between 12 degrees to 29 degrees and preferably between 20 degrees to 25 degrees. The polish is at least down to N7, typically down to N6 preferably down to N5 and ideally in the order of N4 or lower. The ratio between the diameters at 4 and 5 is preferably in the range 1.05:1 to 1.15:1. This has been found to provide an adequate level of clearance between pipe liner and internal pipe diameter for most normal pipes and to be comfortably within the diametric dimensional recovery of the material.

The body of the die 3 in the embodiment illustrated is hollow and houses an electrical heating coil 8 which is supplied with electricity via an electrical supply circuit 9. Power supply to the heating coil is applied to heat the liner pipe to a temperature within the range 35 degrees celsius to 95 degrees celsius and preferably to about 50 degrees celsius. On leaving the die, the swaged liner pipe is cooled by means of an annular heat exchanger 12 which is disposed around the pipe and which extracts heat from the pipe. The heat exchange medium may be carbon dioxide, air, water or any other suitable fluid.

The pipe clamp 2 is fixed to the free end of existing pipe and provides in conjunction with the existing pipe, referenced 10, an anchor against which the liner pipe 7 may be pulled. The supporting structure to which the pipe clamp is connected may be tubular in form or may consist of a plurality of arms connecting the pipe clamp 2 and swaging die 3 together.

In operation of the apparatus, a length of liner pipe 7 of polyethylene or other suitable material may be mitred at one end or pre-formed effectively to form a nose cone at that end over which an apertured metal nose cone may be fitted. A ratio of wall thickness to diameter of the liner pipe in the range 10 to 46 is preferred. Holes are punched in the mitre sections which correspond with those in the metal nose cone and through which a cable is connected to the pipe. The cable is threaded through the swaging die 3 and the existing pipeline and connected to some form of pulling device such as a winch appropriately anchored. The electrical supply is switched on to heat the die to the required temperature and the mitred end of the liner pipe is introduced into the upstream end of the die. Tension in the cable is increased to the required value (usually between 45% and 55% of the yield strength of the liner pipe in question and in particular 50%) until the liner pipe begins to move through the die and be pulled into the existing pipeline. The liner pipe is pulled in this may completely through the existing pipe. The cable is released and the memory characteristic of the material of the pipe is then permitted to expand the pipe until it contacts the internal surface of the existing pipe.

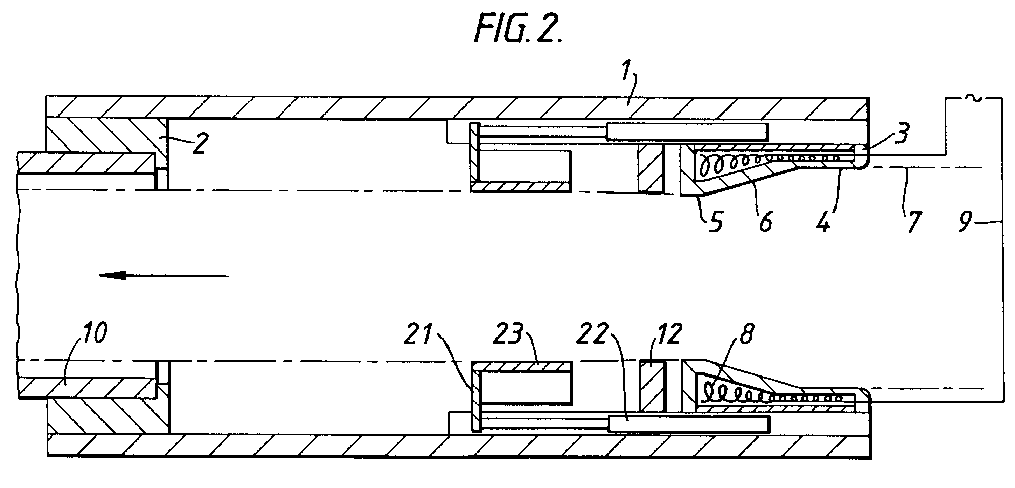

If desired, the pipe may be assisted through the existing pipe by means of a liner pipe pusher machine. Such an arrangement is illustrated in Figure 2 of the drawings. Referring to this figure, the pusher machine, which generally comprises a frame 21, hydraulic cylinder 22, clamp ring 23 and ancillaries is disposed between the swaging die 3 and pipe clamp 2. In operation, this machine pulls the liner pipe through the swaging die 3 and pushes it into the existing pipeline.

The liner pipe may be heated prior to entry into the swaging die stretches as in the manner described in GB-A-2186340.

## Claims

1. A method of lining a pipe which includes the steps of taking a length of liner pipe of external diameter greater than the internal diameter of the pipe to be lined, drawing the liner pipe at ambient temperature through a swaging die using pulling means under tension attached to the leading end of the liner pipe and threaded through the pipework to reduce the external diameter of the liner pipe by up to 15%, drawing the liner pipe through the pipe to be lined with its outer diameter reduced to and/or maintained at a dimension less than that of the inner diameter of the pipe to be lined, the tension applied by the pulling means being such as partially to restrain the radial expansion of the outer surface of the liner pipe after its emergence from the die and thereafter allowing the liner pipe (7) to expand within the pipe (10) to be lined by relaxation of the said tension followed by memory induced expansion at ordinary atmospheric pressure and at the ambient temperature of the pipe (10) to be lined, the pipe (10) to be lined being installed ground embedded pipework, the pipe (10) to be lined and the liner pipe (7) being at least 10 metres in length, the liner pipe (7) being made from polyethylene or a copolymer of ethylene and at least one alphaolefin of up to ten carbon atoms, and the swaging die (3) being attached indirectly to the pipe (10) to be lined by die support means (1) itself attached directly to the pipe (10) to be lined or the die (3) is itself attached directly to the pipe (10) to be lined.

2. A method as claimed in claim 1 in which the liner pipe (7) is preheated to a temperature of from 45° to 55°C.

## Patentansprüche

1. Verfahren zum Auskleiden eines Rohres, mit den folgenden Verfahrensschritten: Anwendung einer Länge eines Auskleidungsrohres mit einem Außendurchmesser, der größer ist als der Innendurchmesser des auszukleidenden Rohres, Ziehen des Auskleidungsrohres bei Umgebungstemperatur durch eine Ziehmatrize hindurch unter Verwendung einer unter Zugspannung stehenden Zugvorrichtung, die am vorderen Ende des Auskleidungsrohres befestigt und durch das Rohrwerk hindurchgefädelt ist, um den Außendurchmesser des Auskleidungsrohres bis zu 15 % zu reduzieren, Ziehen des Auskleidungsrohres durch das auszukleidende Rohr hindurch, wobei sein Außendurchmesser reduziert ist und/oder auf einer Abmessung gehalten wird, die geringer ist als die des Innendurchmessers des auszukleidenden Rohres, wobei die Zugspannung, die durch die Zugvorrichtung angelegt wird, so ist, daß die radiale Ausdehnung der Außenoberfläche des Auskleidungsrohres nach seinem Austritt aus der Matrize teilweise zurückgehalten wird und daß danach dem Auskleidungsrohr (7) die Möglichkeit gegeben wird, sich innerhalb des auszukleidenden Rohres (10) auszudehnen, und zwar durch Nachlassen der Zugspannung, gefolgt von einer durch "Erinnerung" bzw. Rückfederung induzierten Ausdehnung bei normalem atmosphärischem Druck und bei Umgebungstemperatur des auszukleidenden Rohres (10), wobei das auszukleidende Rohr ein im Erdboden verlegtes Rohrwerk ist, das auszukleidende Rohr (10) und das Auskleidungsrohr (7) mindestens zehn Meter lang sind, das Auskleidungsrohr (7) aus Polyethylen oder einem Kopolymer von Ethylen und mindestens einem Alphaolefin von bis zu zehn Kohlenstoffatomen besteht und wobei die Ziehmatrize (3) indirekt am auszukleidenden Rohr (10) durch eine Haltevorrichtung (1) befestigt ist, die ihrerseits direkt am auszukleidenden Rohr (10) befestigt ist, oder die Matrize (3) ist direkt am auszukleidenden Rohr (10) befestigt.

2. Verfahren nach Anspruch 1, bei dem das Auskleidungsrohr (7) auf eine Temperatur von 45° bis 55° C vorgeheizt wird.

## Revendications

1. Procédé de chemisage d'une conduite qui comprend les étapes consistant à prendre une longueur de conduite de chemisage d'un diamètre extérieur plus grand que le diamètre intérieur de la conduite à chemiser, à étirer la conduite de chemisage à la température ambiante à travers une étampe en utilisant des moyens de traction sous tension reliés à l'extrémité avant de la conduite de chemisage et passés dans la canalisation pour réduire jusqu'à 15 % le diamètre extérieur de la conduite de chemisage, à tirer la conduite de chemisage dans la canalisation devant être chemisée, avec son diamètre extérieur réduit et/ou maintenu à une dimension inférieure à celle du diamètre intérieur de la conduite devant être chemisée, la tension appliquée par les moyens de traction étant telle qu'elle empêche partiellement l'expansion radiale de la surface extérieure de la conduite de chemisage après sa sortie de l'étampe et à permettre ensuite à la conduite (7) de chemisage de s'expanser à l'intérieur de la conduite (10) à chemiser par un relâchement de ladite tension suivi d'une expansion réduite par mémoire à la pression atmosphérique normale et à la température ambiante de la conduite (10) à chemiser, la conduite (10) à chemiser étant une canalisation noyée dans le sol, installée, la conduite (10) à chemiser et la conduite (7) de chemisage ayant une longueur d'au moins 10 mètres, la conduite (7) de chemisage étant formée de polyéthylène ou un copolymère d'éthylène et d'au moins une alpha-oléfine ayant jusqu'à 10 atomes de carbone, et l'étampe (3) étant reliée indirectement à la conduite (10) à chemiser par un moyen (1) de support d'étampe lui-même relié directement à la conduite (10) à chemiser, ou bien l'étampe (3) étant reliée elle-même directement à la conduite (10) à chemiser.

2. Procédé selon la revendication 1, dans lequel la conduite (7) de chemisage est préchauffée à une température de 45°C à 55°C.
